# EUROPÄISCHE PATENTANMELDUNG

(11) **EP 4 241 887 A1**
(43) Veröffentlichungstag der Anmeldung: **13.09.2023**
(21) Anmeldenummer: 23160817.5
(22) Anmeldetag: 08.03.2023
(51) Int. Cl.: B01L 3/02, F16H 25/24, G01B 3/00, G01N 35/04

(54) **PIPETTIERVORRICHTUNG**

(30) Priorität: 11.03.2022 DE 102022105754
(71) Anmelder: BRAND GMBH + CO KG, 97877 Wertheim (DE)
(72) Erfinder: SETZER, Daniel, 97877 Wertheim (DE)
(74) Vertreter: Von Rohr Patentanwälte Partnerschaft mbB

(57) **Zusammenfassung**

Die Erfindung betrifft eine Pipettiervorrichtung zum Aufnehmen und Abgeben von Fluidvolumina. Die Pipettiervorrichtung hat eine Antriebseinrichtung mit einem Elektromotor und eine Getriebeeinrichtung mit einem ersten Abtriebsmittel. Die Getriebeeinrichtung ist von dem Elektromotor mittels einer Drehbewegung angetrieben und dazu ausgebildet, eine Drehbewegung des Elektromotors auf das erste Abtriebsmittel zu übertragen. Erfindungsgemäß ist vorgesehen, dass die Getriebeeinrichtung ein zweites Abtriebsmittel aufweist und dazu ausgebildet ist, eine Drehbewegung des Elektromotors auf das zweite Abtriebsmittel zu übertragen.

## Beschreibung

Die Erfindung betrifft eine Pipettiervorrichtung zum Aufnehmen und Abgeben von Fluidvolumina mit den Merkmalen des Oberbegriffs von Anspruch 1.

Eine Pipettiervorrichtung der in Rede stehenden Art dient zum Aufnehmen und Abgeben von Fluidvolumina mittels einer Verdrängereinrichtung. Solch eine Pipettiervorrichtung dient insbesondere zum wiederholten Dispensieren, Titrieren bzw. Pipettieren von Flüssigkeiten.

Die Verdrängereinrichtung kann integraler Bestandteil der Pipettiervorrichtung sein oder als Austauschteil ausgebildet sein und lösbar mit der Pipettiervorrichtung gekoppelt werden. Im letzteren Fall kann nach einem oder mehreren Dosiervorgängen die Verdrängereinrichtung von der Pipettiervorrichtung gelöst werden. Anschließend kann eine andere, insbesondere unterschiedliche Verdrängereinrichtung an der Pipettiervorrichtung angebracht werden.

Die Verdrängereinrichtung kann als Kolben-Zylinder-Einheit ausgebildet sein oder mehrere Kolben-Zylinder-Einheiten aufweisen. Vorzugsweise hat die Verdrängereinrichtung ein Verdrängermittel, insbesondere einen Kolben, und ein Verdrängergehäuse, insbesondere einen Zylinder. Das Verdrängermittel ist beweglich im Verdrängergehäuse angeordnet und mittels einer Antriebseinrichtung im Verdrängergehäuse bewegbar. Bei der Bewegung des Verdrängermittels im Verdrängergehäuse handelt es sich um eine im Wesentlichen translatorische Bewegung, insbesondere in Axialrichtung des Verdrängergehäuses.

Die Pipettiervorrichtung kann zusammen mit der Verdrängereinrichtung auf dem Luftpolsterprinzip oder auf dem Direktverdrängerprinzip basieren.

An die Verdrängereinrichtung kann eine Pipettenspitze, vorzugsweise luftdicht, anbringbar sein. Die Pipettenspitze kann mit der Verdrängereinrichtung mittels Steckverbindung verbunden werden. Dazu kann die Verdrängereinrichtung ein rohrförmiges zylindrisch oder konisch ausgeführtes Endstück aufweisen, auf das die Pipettenspitze mit einer entsprechenden rohrförmigen Öffnung aufgesteckt wird. Die Verdrängereinrichtung und die Pipettenspitze können gemeinsam einen abgeschlossenen Luftraum bilden. Die Verdrängereinrichtung verändert das Volumen des Luftraumes und ermöglicht so das Ansaugen und Abgeben von Flüssigkeit in die und aus der Pipettenspitze. Die Pipettenspitze ist von der Verdrängereinrichtung wieder trennbar bzw. abwerfbar. Zum Trennen bzw. Abwerfen der Pipettenspitze von der Verdrängereinrichtung ist an der Pipettiervorrichtung eine Abwerfereinrichtung bzw. ein Abwerfermechanismus vorgesehen.

Alternativ kann die Verdrängereinrichtung als Spritze ausgebildet sein.

Die Verdrängereinrichtung kann vollständig oder teilweise von der Pipettiervorrichtung trennbar sein.

Die Pipettiervorrichtung kann von Hand gehalten oder Teil eines Laborautomaten sein.

Eine Pipettiervorrichtung der in Rede stehenden Art ist im Dokument EP 3 399 215 A1 offenbart. Die bekannte Pipettiervorrichtung hat eine Antriebseinrichtung mit einem Elektromotor und eine Getriebeeinrichtung mit einem ersten Abtriebsmittel, nämlich einer Gewindespindel. Die Getriebeeinrichtung hat außerdem eine Spindelmutter. Die Getriebeeinrichtung ist von der Antriebseinrichtung angetrieben und dazu ausgebildet, eine Drehbewegung des Elektromotors in eine translatorische Bewegung des ersten Abtriebsmittels umzuwandeln. Das Abtriebsmittel treibt ein Verdrängermittel, nämlich einen Kolben, einer Verdrängereinheit, nämlich einer austauschbaren Spritze oder einer Kolben-Zylinder-Einheit der Pipettiervorrichtung an.

Eine Aufgabe der vorliegenden Erfindung ist es, die bekannte Pipettiervorrichtung hinsichtlich der Funktionalität und/oder Einsatzmöglichkeiten und/oder Handhabung und/oder des Platzbedarfs der Getriebeeinrichtung zu verbessern.

Erfindungsgemäß wird die zuvor geschilderte Aufgabenstellung durch die Pipettiervorrichtung nach Anspruch 1 gelöst. Bevorzugte Ausgestaltungen dieses Erfindungsaspekts sind Gegenstand der Unteransprüche.

Die erfindungsgemäße Pipettiervorrichtung hat eine Antriebseinrichtung mit einem Elektromotor, insbesondere mit genau einem Elektromotor.

Die Pipettiervorrichtung hat außerdem eine Getriebeeinrichtung mit einem ersten Abtriebsmittel. Die Getriebeeinrichtung ist, vorzugsweise ausschließlich, von der Antriebseinrichtung, insbesondere von dem Elektromotor, mittels einer Drehbewegung angetrieben. Die Getriebeeinrichtung ist dazu ausgebildet, eine Drehbewegung des Elektromotors auf das erste Abtriebsmittel zu übertragen. Vorzugsweise ist die Getriebeeinrichtung dazu ausgebildet, eine Drehbewegung des Elektromotors in eine bevorzugt translatorische Bewegung des ersten Abtriebsmittels umzuformen. Eine Drehbewegung des Elektromotors muss nicht zwangsweise zu einer Bewegung des ersten Abtriebsmittels führen. So kann eine Bewegung des ersten Abtriebsmittels zeitweise bzw. wahlweise blockiert sein.

Erfindungsgemäß weist die Getriebeeinrichtung ein zweites Abtriebsmittel auf und ist dazu ausgebildet, eine Drehbewegung des Elektromotors auf das zweite Abtriebsmittel zu übertragen. Vorzugsweise ist die Getriebeeinrichtung dazu ausgebildet, eine Drehbewegung des Elektromotors in eine bevorzugt translatorische Bewegung des zweiten Abtriebsmittels umzuformen. Eine Drehbewegung des Elektromotors muss nicht zwangsweise zu einer Bewegung des zweiten Abtriebsmittels führen. So kann ein Bewegen des zweiten Abtriebsmittels zeitweise bzw. wahlweise blockiert sein.

Die erfindungsgemäße Pipettiervorrichtung weist also zwei von der Antriebseinrichtung, insbesondere dem Elektromotor, angetriebene bzw. antreibbare Abtriebsmittel auf, die unterschiedliche Komponenten, z. B. zwei unterschiedliche Komponenten der Pipettiervorrichtung, antreiben können bzw. Bewegungen bzw. Kräfte auf unterschiedliche Komponenten übertragen können.

Durch das Antreiben unterschiedlicher Komponenten durch einen einzigen Elektromotor ist der Platzbedarf gering bzw. geringer als bei der bekannten Pipettiervorrichtung. Außerdem ermöglicht dies eine Kostenersparnis.

Die beiden Abtriebsmittel können mittels eines einzigen Elektromotors in unterschiedliche Richtungen bewegt werden.

Durch die erfindungsgemäße Ausgestaltung bietet die Pipettiervorrichtung eine im Vergleich zur bekannten Pipettiervorrichtung verbesserte Funktionalität und Flexibilität und eröffnet mehr Einsatzmöglichkeiten.

Vorzugsweise sind das erste Abtriebsmittel und das zweite Abtriebsmittel, bevorzugt ausschließlich, von dem Elektromotor der Antriebseinrichtung angetrieben. Insbesondere sind also nicht mehrere Elektromotoren, sondern genau ein Elektromotor zum Antreiben der beiden Abtriebsmittel vorgesehen.

Es ist bevorzugt, wenn das erste Abtriebsmittel mit einer Verdrängereinrichtung koppelbar oder gekoppelt ist. Wie weiter oben dargelegt, kann diese Verdrängereinrichtung integraler Bestandteil der Pipettiervorrichtung sein oder als Austauschteil ausgebildet sein und lösbar mit der Pipettiervorrichtung gekoppelt werden. Vorzugsweise weist die Verdrängereinrichtung ein Verdrängermittel, insbesondere einen Kolben, und ein Verdrängergehäuse, insbesondere einen Zylinder, auf. Das Verdrängermittel ist beweglich im Verdrängergehäuse angeordnet. Es ist besonders bevorzugt, wenn das erste Abtriebsmittel mit dem Verdrängermittel bewegungsmäßig gekoppelt ist. Wenn sich das erste Abtriebsmittel bewegt, insbesondere aufgrund einer Drehbewegung des Elektromotors, so bewegt sich auch das Verdrängermittel. Die Bewegung des Verdrängermittels kann dann zum Aufnehmen, Abgeben und Dosieren von Fluidvolumina genutzt werden.

Vorteilhafterweise ist die Pipettiervorrichtung so ausgestaltet, dass das erste Abtriebsmittel und das zweite Abtriebsmittel translatorisch entlang derselben Gerade oder paralleler Geraden bewegbar sind.

Vorzugsweise ist das erste Abtriebsmittel, insbesondere durch weitere Bauteile der Getriebeeinrichtung, mit dem Elektromotor bewegungsmäßig koppelbar, so dass im gekoppelten Zustand eine Drehbewegung des Elektromotors in eine vorzugsweise translatorische Bewegung des ersten Abtriebsmittels umgeformt wird. Das zweite Abtriebsmittel ist, insbesondere durch weitere Bauteile der Getriebeeinrichtung, mit dem Elektromotor bewegungsmäßig koppelbar, so dass im gekoppelten Zustand Drehbewegung des Elektromotors in eine vorzugsweise translatorische Bewegung des zweiten Abtriebsmittels umgeformt wird.

Bei einer bevorzugten Ausführungsform hat die Getriebeeinrichtung eine Gewindemutter, die bewegungsmäßig mit dem Elektromotor koppelbar ist, so dass im gekoppelten Zustand eine Drehbewegung des Elektromotors eine Drehbewegung der Gewindemutter verursacht. Das erste Abtriebsmittel weist eine Gewindespindel auf, die mit der Gewindemutter der Getriebeeinrichtung in Eingriff steht und verdrehgesichert ist, so dass eine vom Elektromotor verursachte Drehbewegung der Gewindemutter eine translatorische Bewegung der Gewindespindel verursacht.

Hierbei ist es bevorzugt, wenn die Gewindespindel mit einem Verdrängermittel einer Verdrängereinrichtung bewegungsmäßig koppelbar oder gekoppelt ist, bevorzugt mittels eines Magneten der Pipettiervorrichtung.

Bevorzugt ist auch, wenn die Getriebeeinrichtung ein rotatorisch bewegbares Gewindeteil aufweist, das bewegungsmäßig mit dem Elektromotor koppelbar ist, so dass im gekoppelten Zustand eine Drehbewegung des Elektromotors eine Drehbewegung des Gewindeteils der Getriebeeinrichtung verursacht. Das zweite Abtriebsmittel hat ein translatorisch bewegbares Gewindeteil, das mit dem Gewindeteil der Getriebeeinrichtung in Eingriff steht, so dass eine vom Elektromotor verursachte Drehbewegung des Gewindeteils der Getriebeeinrichtung eine translatorische Bewegung des Gewindeteils des zweites Abtriebsmittels verursacht.

Vorteilhaft, insbesondere platzsparend, ist es, wenn
- das zweite Abtriebsmittel, insbesondere das Gewindeteil des zweiten Abtriebsmittels, koaxial zum ersten Abtriebsmittel, insbesondere zur Gewindespindel des ersten Abtriebsmittels, angeordnet ist und/oder
- die Bewegungsachse des zweiten Abtriebsmittels, insbesondere des Gewindeteils des zweiten Abtriebsmittels, mit der Bewegungsachse des ersten Abtriebsmittels, insbesondere der Gewindespindel des ersten Abtriebsmittels, übereinstimmt und/oder
- das zweite Abtriebsmittel, insbesondere das Gewindeteil des zweiten Abtriebsmittels, das erste Abtriebsmittel, insbesondere die Gewindespindel des ersten Abtriebsmittels, zumindest teilweise umgibt und/oder
- das erste Abtriebsmittel, insbesondere die Gewindespindel des ersten Abtriebsmittels, zumindest teilweise in einem Hohlraum des zweiten Abtriebsmittels, insbesondere in einem Hohlraum des Gewindeteils des zweiten Abtriebsmittels, angeordnet ist.

Unter dem Begriff "Bewegungsachse" ist diejenige Symmetrieachse des ersten bzw. zweiten Abtriebsmittels zu verstehen, entlang der das erste bzw. zweite Abtriebsmittel bewegbar ist.

In einer bevorzugten Ausführungsform weist die Pipettiervorrichtung eine Schalteinrichtung auf,
- mittels der die Getriebeeinrichtung derart schaltbar ist, dass die Getriebeeinrichtung entweder das erste Abtriebsmittel oder das zweite Abtriebsmittel bewegt, wenn die Getriebeeinrichtung durch den Elektromotor angetrieben wird, und/oder
- mittels der wahlweise das erste Abtriebsmittel oder das zweite Abtriebsmittel blockierbar ist und/oder
- mittels der die Getriebeeinrichtung bewegungsmäßig mit dem Elektromotor koppelbar und bewegungsmäßig vom Elektromotor entkoppelbar ist.

Ein Blockieren des ersten Abtriebsmittels und/oder des zweiten Abtriebsmittels kann auch indirekt erfolgen, indem eine Komponente der Pipettiervorrichtung blockiert ist, die mit dem ersten Abtriebsmittel bzw. dem zweiten Abtriebsmittel bewegungsmäßig gekoppelt ist.

Vorteilhaft ist es, wenn die Schalteinrichtung ausgebildet ist
- zum Aktivieren einer Bewegung des ersten Abtriebsmittels und zum vorzugsweise gleichzeitigen Deaktivieren einer Bewegung des zweiten Abtriebsmittels und/oder
- zum Aktivieren einer Bewegung des zweiten Abtriebsmittels und zum vorzugsweise gleichzeitigen Deaktivieren einer Bewegung des ersten Abtriebsmittels.

Bevorzugt ist es, wenn die Schalteinrichtung ein Blockiermittel aufweist, das zum Blockieren von mindestens einem Bauteil der Getriebeeinrichtung und/oder zum Blockieren des ersten Abtriebsmittels und/oder zum Blockieren des zweiten Abtriebsmittels ausgebildet ist. Vorzugsweise ist das Blockiermittel axial zu einer Rotationsachse der Getriebeeinrichtung verstellbar und/oder mittels eines Aktivators der Pipettiervorrichtung angetrieben bzw. bewegbar. Bei dem Aktivator kann es sich z. B. um einen weiteren Elektromotor oder um einen Magneten oder um ein von außerhalb der Pipettiervorrichtung manuell bedienbares Bauteil der Pipettiervorrichtung handeln. Mittels des Aktivators kann das Blockiermittel in unterschiedliche Stellungen bewegbar sein, zum Beispiel in eine erste Blockierstellung zum Blockieren des ersten Abtriebsmittels und in eine zweite Blockierstellung zum Blockieren des zweiten Abtriebsmittels. Es kann auch vorgesehen sein, dass das Blockiermittel mittels des Aktivators in eine Grundstellung bewegbar ist, in der das Blockiermittel weder das erste Abtriebsmittel noch das zweite Abtriebsmittel blockiert.

Es ist bevorzugt, wenn die Schalteinrichtung oder das Blockiermittel ein Gesperre aufweist oder das Blockiermittel durch ein Gesperre gebildet ist. Insbesondere ist das Gesperre ein auf Formschluss basierendes Formgesperre oder ein auf Kraftschluss basierendes Kraftgesperre, ganz besonders ein Reibgesperre oder ein Magnetgesperre.

Mittels des Blockiermittels ist es möglich zu verhindern, dass die beiden Abtriebsmittel gleichzeitig bewegt werden.

Vorzugsweise weist die Pipettiervorrichtung ein Bedienelement zur Steuerung des Elektromotors auf, mittels dem das Blockiermittel und/oder der Aktivator steuerbar ist/sind. Dies erlaubt eine einfache Handhabung. Das Bedienelement kann beispielsweise ein Display, einen Bedienknopf oder dergleichen aufweisen oder daraus gebildet sein. Das Bedienelement kann auch zur Steuerung weiterer Bauteile oder Funktionen der Pipettiervorrichtung ausgebildet sein.

Es hat sich als vorteilhaft erwiesen, wenn die Getriebeeinrichtung ein Umlaufrädergetriebe aufweist mit
- einem ersten Zentralrad,
- einem zweiten Zentralrad, das vom Elektromotor angetrieben ist, das konzentrisch zu dem ersten Zentralrad angeordnet ist und dabei um eine Zentralachse rotiert, und
- einem Umlaufrad, vorzugsweise drei Umlaufrädern, wobei jedes Umlaufrad um eine Umlaufachse drehbar und zwischen dem ersten und zweiten Zentralrad angeordnet ist und jeweils mit dem ersten und zweiten Zentralrad in Eingriff steht.

Vorzugsweise rotiert das erste Zentralrad und/oder ein Träger des Umlaufrades um die Zentralachse.

Bevorzugt ist es, wenn das Umlaufrädergetriebe ein Planetengetriebe ist, wobei
- das erste Zentralrad einen Hohlraum aufweist,
- das zweite Zentralrad im Hohlraum des ersten Zentralrades angeordnet ist, vom Elektromotor angetrieben ist und um eine Zentralachse rotiert,
- jedes Umlaufrad zwischen dem ersten Zentralrad und zweiten Zentralrad im Hohlraum angeordnet ist und jeweils mit dem ersten Zentralrad und dem zweiten Zentralrad in Eingriff steht und
- das erste Zentralrad und/oder ein Träger des Umlaufrades um die Zentralachse rotiert.

Bei einer solchen Ausgestaltung des Umlaufrädergetriebes als Planetengetriebe wird das erste Zentralrad auch als Hohlrad, das zweite Zentralrad auch als Sonnenrad, das Umlaufrad auch als Planetenrad und der Träger des Umlaufrades auch als Planetenradträger bezeichnet.

Die Ausgestaltung mit einem Planetengetriebe erlaubt eine kompakte Bauweise der Pipettiervorrichtung bzw. verursacht einen geringen bzw. im Vergleich zur bekannten Pipettiervorrichtung geringeren Platzbedarf.

Bei einer besonders bevorzugten Ausführungsform ist das erste Zentralrad, insbesondere mittels des Blockiermittels, derart blockierbar, dass kein Rotieren des ersten Zentralrads um die Zentralachse möglich ist und ein Rotieren des zweiten Zentralrads um die Zentralachse ein Rotieren des Trägers des Umlaufrades um die Zentralachse verursacht. Bei dieser Ausführungsform ist außerdem der Träger des Umlaufrades, vorzugsweise mittels des Blockiermittels, derart blockierbar, dass kein Rotieren des Umlaufrades oder des Trägers des Umlaufrades um die Zentralachse möglich ist und ein Rotieren des zweiten Zentralrads um die Zentralachse ein Rotieren des ersten Zentralrads um die Zentralachse verursacht.

Weiter bevorzugt ist es, wenn das Umlaufrad oder der Träger des Umlaufrades mit dem ersten Abtriebsmittel bewegungsmäßig gekoppelt ist. Ein Bewegen des Umlaufrades oder des Trägers des Umlaufrades verursacht also ein Bewegen des ersten Abtriebsmittels.

Dabei ist es bevorzugt, wenn die Getriebeeinrichtung eine Gewindemutter aufweist und die Gewindemutter bewegungsmäßig mit dem Elektromotor koppelbar ist, so dass im gekoppelten Zustand eine Drehbewegung des Elektromotors eine Drehbewegung der Gewindemutter verursacht. Das erste Abtriebsmittel weist eine Gewindespindel auf oder ist durch eine Gewindespindel gebildet, wobei die Gewindespindel mit der Gewindemutter der Getriebeeinrichtung in Eingriff steht. Die Gewindespindel ist verdrehgesichert. Das Umlaufrad oder der Träger des Umlaufrades ist mit der Gewindemutter bewegungsmäßig gekoppelt, so dass eine Drehbewegung des Umlaufrades oder des Trägers des Umlaufrades um die Zentralachse eine Drehbewegung der Gewindemutter und eine translatorische Bewegung der Gewindespindel verursacht.

Vorzugsweise ist die Gewindespindel mit dem Verdrängermitttel bewegungsmäßig koppelbar oder gekoppelt, bevorzugt mittels eines Magneten der Pipettiervorrichtung.

Auch bevorzugt ist es, wenn das erste Zentralrad mit dem zweiten Abtriebsmittel bewegungsmäßig gekoppelt ist. Ein Bewegen des ersten Zentralrads verursacht also ein Bewegen des zweiten Abtriebsmittels.

Dabei ist es bevorzugt, wenn die Getriebeeinrichtung ein rotatorisch bewegbares Gewindeteil aufweist und das Gewindeteil der Getriebeeinrichtung bewegungsmäßig mit dem Elektromotor koppelbar ist, so dass im gekoppelten Zustand eine Drehbewegung des Elektromotors eine Drehbewegung des Gewindeteils der Getriebeeinrichtung verursacht. Das zweite Abtriebsmittel weist ein translatorisch bewegbares Gewindeteil auf, das mit einem rotatorisch bewegbaren Gewindeteil der Getriebeeinrichtung, vorzugsweise mit einem Außengewinde des Gewindeteils der Getriebeeinrichtung, in Eingriff steht. Das erste Zentralrad ist mit dem Gewindeteil der Getriebeeinrichtung bewegungsmäßig gekoppelt, so dass eine Drehbewegung des ersten Zentralrads um die Zentralachse eine Drehbewegung des Gewindeteils der Getriebeeinrichtung und eine translatorische Bewegung des Gewindeteils des zweiten Abtriebsmittels verursacht.

Vorzugsweise ist die Gewindespindel innerhalb eines Hohlraums des Gewindeteils der Getriebeeinrichtung und/oder innerhalb eines Hohlraums des Gewindeteils des zweiten Abtriebsmittels angeordnet. Bevorzugt ist das Gewindeteil der Getriebeeinrichtung an/auf der Gewindemutter gelagert. Es kann vorgesehen sein, dass das Gewindeteil des zweiten Abtriebsmittels einen hülsenförmigen Abschnitt aufweist oder als eine Hülse ausgebildet ist. Es kann auch vorgesehen sein, dass das Gewindeteil der Getriebeeinrichtung einen hülsenförmigen Abschnitt aufweist.

Bei einer besonders bevorzugten Ausführungsform sind das erste Zentralrad mit einem ersten Kopplungsmittel der Pipettiervorrichtung und das Umlaufrad, vorzugsweise jedes Umlaufrad, mit einem zweiten Kopplungsmittel der Pipettiervorrichtung verbunden. Die Pipettiervorrichtung weist ein Blockiermittel auf, das wahlweise mit dem ersten Kopplungsmittel oder dem zweiten Kopplungsmittel koppelbar ist. Bei einer Kopplung des Blockiermittels mit dem ersten Kopplungsmittel ist ein Rotieren des ersten Zentralrads um die Zentralachse blockiert und somit ist das zweite Abtriebsmittel blockiert. Bei einer Kopplung des Blockiermittels mit dem zweiten Kopplungsmittel ist ein Rotieren des Umlaufrades, vorzugsweise jedes Umlaufrades, um die Zentralachse blockiert und somit ist das erste Abtriebsmittel blockiert.

Bei dieser Ausführungsform ist es bevorzugt, wenn das Blockiermittel axial zu einer Rotationsachse der Getriebeeinrichtung verstellbar ist und/oder mittels eines Aktivators der Pipettiervorrichtung angetrieben bzw. bewegbar ist. Der Aktivator kann wie zuvor beschrieben ausgebildet sein.

Bei einer besonders bevorzugten Ausführungsform ist die Pipettiervorrichtung, insbesondere das erste Abtriebsmittel, mit einer Verdrängereinrichtung gekoppelt. Vorzugsweise weist die Verdrängereinrichtung ein Verdrängermittel, insbesondere einen Kolben, und ein Verdrängergehäuse, insbesondere einen Zylinder, auf. Das Verdrängermittel ist beweglich im Verdrängergehäuse angeordnet. Insbesondere ist das erste Abtriebsmittel mit dem Verdrängermittel bewegungsmäßig gekoppelt. Die Pipettiervorrichtung weist hier eine Abwerfereinrichtung auf, die derart ausgebildet ist, dass eine an der Verdrängereinrichtung angebrachte Pipettenspitze relativ zur Verdrängereinrichtung bewegbar und schließlich von der Verdrängereinrichtung und/oder der Pipettiervorrichtung abwerfbar ist. Die Getriebeeinrichtung ist dazu ausgebildet, eine Drehbewegung des Elektromotors auf die Abwerfereinrichtung zu übertragen und, vorzugsweise, in eine bevorzugt translatorische Bewegung der Abwerfereinrichtung umzuformen, die zum Abwerfen einer Pipettenspitze von der Pipettiervorrichtung führt. Vorzugsweise ist die Abwerfereinrichtung mit dem zweiten Abtriebsmittel bewegungsmäßig gekoppelt und/oder beweglich angetrieben. Bevorzugt ist die Getriebeeinrichtung dazu ausgebildet, eine Drehbewegung des Elektromotors auf das zweite Abtriebsmittel untersetzt oder übersetzt zu übertragen.

Bei dieser Ausführungsform ist es möglich, eine Pipettenspitze nach dem Aufnehmen eines Fluidvolumens abzuwerfen, ohne das Fluidvolumen vorher aus der Pipettenspitze abzugeben.

Bei dieser Ausführungsform mit einer mittels des Elektromotors angetriebenen Abwerfereinrichtung ist die Schonung des Anwenders, insbesondere bei häufigem Pipettieren, sehr vorteilhaft. Dies trifft umso mehr auf den Fall zu, wenn die Verdrängereinrichtung mehrere Kolben-Zylinder-Einheiten aufweist (Multikanalpipette), da in diesen Fällen erhebliche Kräfte zum Abwerfen von an der Verdrängereinrichtung angebrachten Pipettenspitzen erforderlich sein können.

Bei einer weiteren bevorzugten Ausführungsform weist die Pipettiervorrichtung eine Koppeleinrichtung zum lösbaren Koppeln einer Verdrängereinrichtung, insbesondere einer Kolben-Zylinder-Anordnung, mit der Pipettiervorrichtung auf. Die Getriebeeinrichtung ist dazu ausgebildet, eine Drehbewegung des Elektromotors auf die Koppeleinrichtung zu übertragen, was zum Lösen einer mit der Pipettiervorrichtung gekoppelten Verdrängereinrichtung von der Pipettiervorrichtung führt. Vorzugsweise ist die Koppeleinrichtung mit dem zweiten Abtriebsmittel bewegungsmäßig gekoppelt und/oder beweglich angetrieben. Bevorzugt ist die Getriebeeinrichtung dazu ausgebildet, eine Drehbewegung des Elektromotors auf das zweite Abtriebsmittel untersetzt oder übersetzt zu übertragen.

Die Erfindung wird nachfolgend anhand der Beschreibung bevorzugter Ausführungsbeispiele, zum Teil mit Bezugnahmen auf die Zeichnung, näher erläutert. Die oben beschriebenen und/oder in den Ansprüchen und/oder in der nachfolgenden Beschreibung offenbarten Merkmale können bedarfsweise miteinander kombiniert aber auch unabhängig voneinander realisiert werden, auch wenn dies nicht im Einzelnen ausdrücklich beschrieben ist.

In der Zeichnung zeigt
- Fig. 1: schematisch in einer perspektivischen Ansicht eine erste bevorzugte Ausführungsform einer erfindungsgemäßen Pipettiervorrichtung,
- Fig. 2: schematisch in einer perspektivischen Ansicht einen Teil einer zweiten bevorzugten Ausführungsform einer erfindungsgemäßen Pipettiervorrichtung, wobei eine vereinfachte Darstellung unter Weglassung von Teilen der Pipettiervorrichtung gewählt wurde,
- Fig. 3: schematisch einen Schnitt durch einen Teil der Pipettiervorrichtung aus Fig. 2, wobei eine vereinfachte Darstellung unter Weglassung von Teilen der Pipettiervorrichtung gewählt wurde,
- Fig. 4: schematisch in einer perspektivischen Ansicht einen Teil einer dritten bevorzugten Ausführungsform einer erfindungsgemäßen Pipettiervorrichtung, wobei eine vereinfachte Darstellung unter Weglassung von Teilen der Pipettiervorrichtung gewählt wurde,
- Fig. 5: schematisch in einer perspektivischen Ansicht einen Teil einer vierten bevorzugten Ausführungsform einer erfindungsgemäßen Pipettiervorrichtung, wobei eine vereinfachte Darstellung unter Weglassung von Teilen der Pipettiervorrichtung gewählt wurde,
- Fig. 6: schematisch in einer perspektivischen Ansicht einen Teil der Pipettiervorrichtung aus Fig. 5, nämlich einen Teil eines erfindungsgemäßen Planetengetriebes, wobei eine vereinfachte Darstellung unter Weglassung von Teilen der Pipettiervorrichtung gewählt wurde,
- Fig. 7: schematisch in einer perspektivischen Ansicht einen Teil der Pipettiervorrichtung aus Fig. 5, nämlich einen Teil einer erfindungsgemäßen Getriebeeinrichtung, wobei eine vereinfachte Darstellung unter Weglassung von Teilen der Pipettiervorrichtung gewählt wurde,
- Fig. 8: schematisch in einer perspektivischen Ansicht einen Teil der Pipettiervorrichtung aus Fig. 5, nämlich einen Teil einer erfindungsgemäßen Getriebeeinrichtung, wobei eine vereinfachte Darstellung unter Weglassung von Teilen der Pipettiervorrichtung gewählt wurde,
- Fig. 9: schematisch einen Schnitt durch einen Teil der Pipettiervorrichtung aus Fig. 5, nämlich durch einen Teil einer erfindungsgemäßen Getriebeeinrichtung, wobei eine vereinfachte Darstellung unter Weglassung von Teilen der Pipettiervorrichtung gewählt wurde,
- Fig. 10: schematisch in einer perspektivischen Ansicht einen Teil der Pipettiervorrichtung aus Fig. 5 in einem ersten Zustand, wobei eine vereinfachte Darstellung unter Weglassung von Teilen der Pipettiervorrichtung gewählt wurde,
- Fig. 11: schematisch in einer perspektivischen Ansicht den Teil der Pipettiervorrichtung aus Fig. 10 in einem zweiten Zustand, wobei eine vereinfachte Darstellung unter Weglassung von Teilen der Pipettiervorrichtung gewählt wurde,
- Fig. 12: schematisch in einer perspektivischen Ansicht eine fünfte bevorzugte Ausführungsform einer erfindungsgemäßen Pipettiervorrichtung.

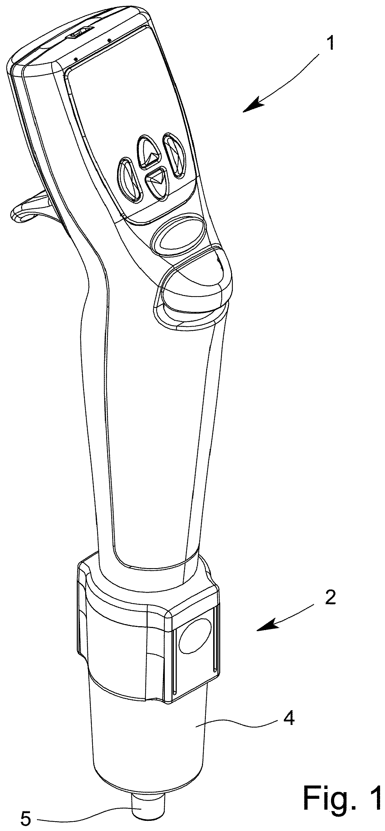

Fig. 1 zeigt schematisch in einer perspektivischen Ansicht eine bevorzugte Ausführungsform einer erfindungsgemäßen Pipettiervorrichtung 1 zum Aufnehmen und Abgeben von Fluidvolumina. Bei dieser Pipettiervorrichtung 1 handelt es sich um eine auf dem Luftpolsterprinzip basierenden Pipettiervorrichtung 1. Die Pipettiervorrichtung 1 hat eine Verdrängereinrichtung 2, insbesondere eine Kolben-Zylinder-Anordnung, mit einem Verdrängermittel 3, insbesondere einem Kolben, und einem Verdrängergehäuse 4, insbesondere einem Zylinder. Das Verdrängermittel 3 ist im Verdrängergehäuse 4 beweglich angeordnet.

An der Verdrängereinrichtung 2 ist eine (in Fig. 1 nicht dargestellte) Pipettenspitze 7 anbringbar. Die Pipettenspitze 7 ist von der Verdrängereinrichtung 2 trennbar bzw. abwerfbar. Eine Pipettenspitze 7 kann mit der Verdrängereinrichtung 2 mittels Steckverbindung verbunden werden. Dazu hat die Pipettiervorrichtung 1 an der Verdrängereinrichtung 2 ein konisch ausgeführtes Endstück 5, auf das eine Pipettenspitze 7 mit einer entsprechenden Öffnung aufgesteckt werden kann.

Zum Trennen bzw. Abwerfen einer Pipettenspitze 7 von der Verdrängereinrichtung 2 ist an der Pipettiervorrichtung 1 eine Abwerfereinrichtung 6 vorgesehen.

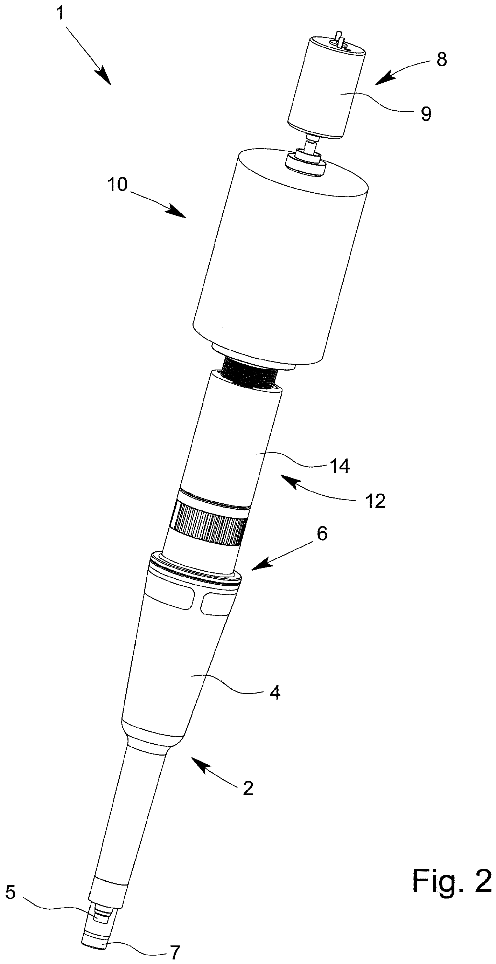

Fig. 2 zeigt schematisch in einer perspektivischen Ansicht einen Teil einer zweiten bevorzugten Ausführungsform einer erfindungsgemäßen Pipettiervorrichtung 1, wobei eine vereinfachte Darstellung unter Weglassung von Teilen der Pipettiervorrichtung 1 gewählt wurde. Auch bei dieser Pipettiervorrichtung 1 handelt es sich um eine auf dem Luftpolsterprinzip basierenden Pipettiervorrichtung 1. Im Vergleich zur Pipettiervorrichtung 1 aus Fig. 1 hat die Pipettiervorrichtung 1 aus Fig. 2 eine unterschiedlich dimensionierte Verdrängereinrichtung 2. An der Verdrängereinrichtung 2, insbesondere an deren Endstück 5, ist eine Pipettenspitze 7 angebracht.

In Fig. 2 ist erkennbar, dass beim dargestellten und bevorzugten Ausführungsbeispiel die Pipettiervorrichtung 1 eine Antriebseinrichtung 8 mit einem Elektromotor 9, insbesondere mit genau einem Elektromotor 9, hat. Außerdem weist die Pipettiervorrichtung 1 eine Getriebeeinrichtung 10 mit einem ersten Abtriebsmittel 11 auf. Die Getriebeeinrichtung 10 ist von dem Elektromotor 9 mittels einer Drehbewegung angetrieben und dazu ausgebildet, eine Drehbewegung des Elektromotors 9 auf das erste Abtriebsmittel 11 zu übertragen. Hier ist die Getriebeeinrichtung 10 dazu ausgebildet, eine Drehbewegung des Elektromotors 9 in eine translatorische Bewegung des ersten Abtriebsmittels 11 umzuformen. Bei dem in Fig. 2 dargestellten und bevorzugten Ausführungsbeispiel ist das erste Abtriebsmittel 11 mit dem Elektromotor 9 bewegungsmäßig koppelbar, so dass im gekoppelten Zustand eine Drehbewegung des Elektromotors 9 in eine translatorische Bewegung des ersten Abtriebsmittels 11 umgeformt wird.

Bei dem dargestellten und bevorzugten Ausführungsbeispiel weist die Getriebeeinrichtung 10 ein zweites Abtriebsmittel 12 auf und ist dazu ausgebildet, eine Drehbewegung des Elektromotors 9 auf das zweite Abtriebsmittel 12 zu übertragen. Hier ist die Getriebeeinrichtung 10 dazu ausgebildet, eine Drehbewegung des Elektromotors 9 in eine translatorische Bewegung des zweiten Abtriebsmittels 12 umzuformen. Bei dem in Fig. 2 dargestellten und bevorzugten Ausführungsbeispiel ist das zweite Abtriebsmittel 12 mit dem Elektromotor 9 bewegungsmäßig koppelbar, so dass im gekoppelten Zustand eine Drehbewegung des Elektromotors 9 in eine translatorische Bewegung des zweiten Abtriebsmittels 12 umgeformt wird.

Bei dem dargestellten und bevorzugten Ausführungsbeispiel ist genau ein Elektromotor 9 (der Elektromotor 9 der Antriebseinrichtung 8) zum Antreiben des ersten Abtriebsmittels 11 und des zweiten Abtriebsmittels 12 vorgesehen.

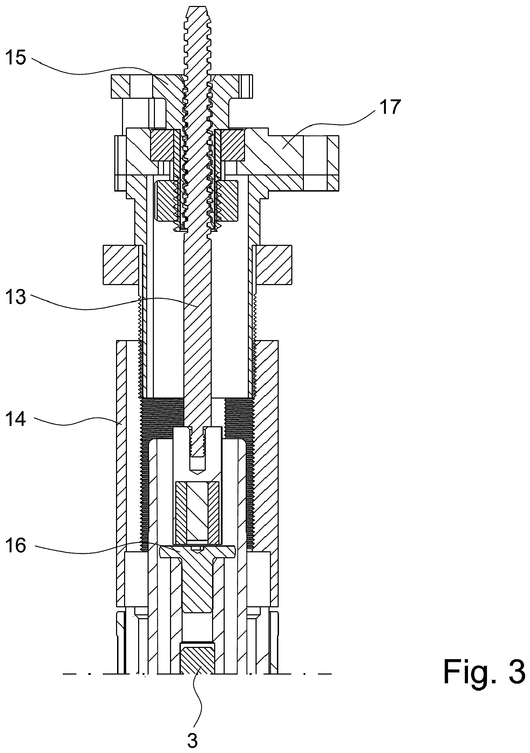

Fig. 3 zeigt schematisch einen Schnitt durch einen Teil der Pipettiervorrichtung 1 aus Fig. 2, wobei eine vereinfachte Darstellung unter Weglassung von Teilen der Pipettiervorrichtung 1 gewählt wurde. Bei dem dargestellten und bevorzugten Ausführungsbeispiel hat die Getriebeeinrichtung 10 eine Gewindemutter 15, die bewegungsmäßig mit dem Elektromotor 9 koppelbar ist, so dass im gekoppelten Zustand eine Drehbewegung des Elektromotors 9 eine Drehbewegung der Gewindemutter 15 verursacht. Das erste Abtriebsmittel 11 hat eine Gewindespindel 13, die mit der Gewindemutter 15 in Eingriff steht. Die Gewindespindel 13 ist verdrehgesichert. Durch die Getriebeeinrichtung 10 verursacht eine Drehbewegung des Elektromotors 9 eine Drehbewegung der Gewindemutter 15 und eine translatorische Bewegung der Gewindespindel 13.

Die Gewindespindel 13 ist mit dem Verdrängermittel 3 bewegungsmäßig gekoppelt, hier mittels eines Magneten 16 der Pipettiervorrichtung 1.

Bei dem dargestellten und bevorzugten Ausführungsbeispiel hat die Getriebeeinrichtung 10 ein rotatorisch bewegbares Gewindeteil 17, das bewegungsmäßig mit dem Elektromotor 9 koppelbar ist, so dass im gekoppelten Zustand eine Drehbewegung des Elektromotors 9 eine Drehbewegung des Gewindeteils 17 der Getriebeeinrichtung 10 verursacht. Das zweite Abtriebsmittel 12 hat ein translatorisch bewegbares Gewindeteil 14 mit einem hohlzylindrischen Abschnitt. Das Gewindeteil 14 des zweiten Abtriebsmittels 12 steht mit einem rotatorisch bewegbaren Gewindeteil 17 der Getriebeeinrichtung 10, hier mit einem Außengewinde des Gewindeteils 17 der Getriebeeinrichtung 10, in Eingriff. Durch die Getriebeeinrichtung 10 verursacht eine Drehbewegung des Elektromotors 9 eine Drehbewegung des Gewindeteils 17 der Getriebeeinrichtung 10 und eine translatorische Bewegung des Gewindeteils 14 des zweites Abtriebsmittels 12.

Das zweite Abtriebsmittel 12, insbesondere das Gewindeteil 14 des zweiten Abtriebsmittels 12, ist mit der Abwerfereinrichtung 6 bewegungsmäßig gekoppelt.

Bei dem dargestellten und bevorzugten Ausführungsbeispiel ist die Abwerfereinrichtung 6 der Pipettiervorrichtung 1 derart ausgebildet ist, dass eine an der Verdrängereinrichtung 2 angebrachte Pipettenspitze 7 relativ zur Verdrängereinrichtung 2 bewegbar und schließlich von der Verdrängereinrichtung 2 und der Pipettiervorrichtung 1 abwerfbar ist.

Die Getriebeeinrichtung 10 ist dazu ausgebildet, eine Drehbewegung des Elektromotors 9 auf die Abwerfereinrichtung 6 zu übertragen und in eine translatorische Bewegung der Abwerfereinrichtung 6 umzuformen, die zum Abwerfen einer an der Verdrängereinrichtung 2 angebrachten Pipettenspitze 7 von der Verdrängereinrichtung 2 führt.

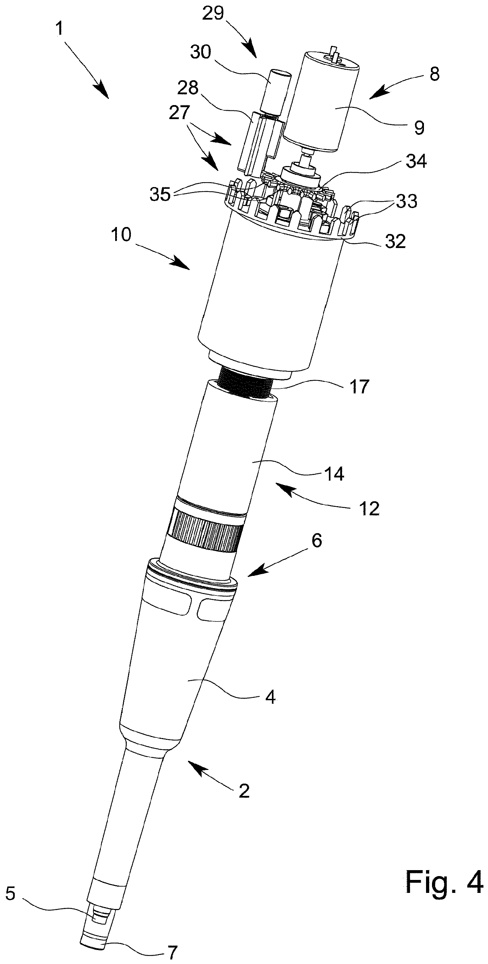

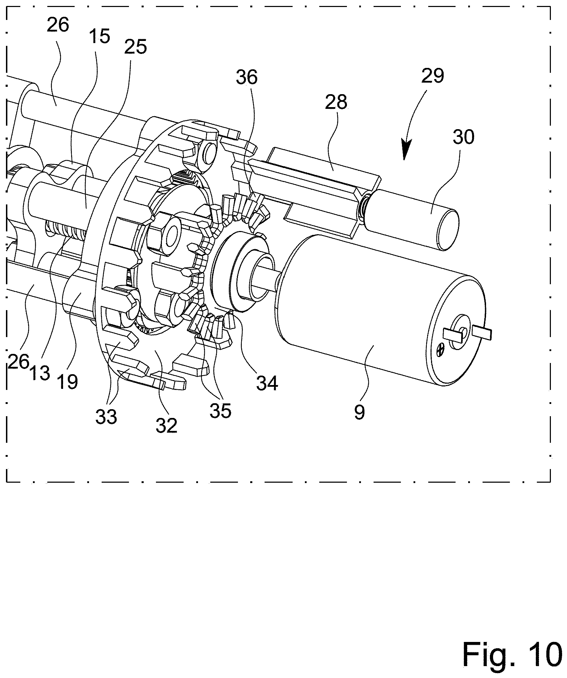

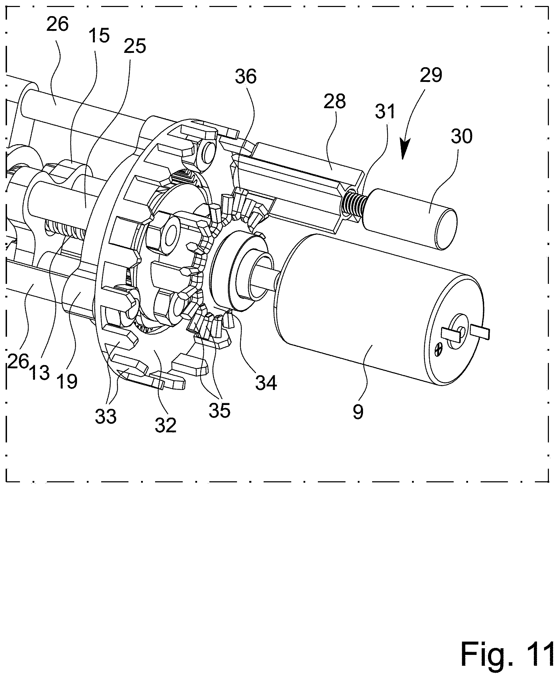

Fig. 4 zeigt schematisch in einer perspektivischen Ansicht einen Teil einer dritten bevorzugten Ausführungsform einer erfindungsgemäßen Pipettiervorrichtung 1, wobei eine vereinfachte Darstellung unter Weglassung von Teilen der Pipettiervorrichtung 1 gewählt wurde. Im Vergleich zur Pipettiervorrichtung 1 gemäß der Fig. 2 und 3 weist die Pipettiervorrichtung 1 gemäß Fig. 4 zusätzlich eine Schalteinrichtung 27 auf. Diese Schalteinrichtung 27 ist in Bezug auf die Fig. 10 und 11 näher erläutert.

Bei allen dargestellten und bevorzugten Ausführungsbeispielen ist das zweite Abtriebsmittel 12, nämlich das Gewindeteil 14 des zweiten Abtriebsmittels 12, koaxial zum ersten Abtriebsmittel 11, nämlich zur Gewindespindel 13 des ersten Abtriebsmittels 11, angeordnet. Die Bewegungsachse des Gewindeteils 14 des zweiten Abtriebsmittels 12 stimmt mit der Bewegungsachse der Gewindespindel 13 überein. Diese Bewegungsachse entspricht der Mittellängsachse der Pipettiervorrichtung 1. Das Gewindeteil 14 des zweiten Abtriebsmittels 12 hat einen hohlzylindrischen Abschnitt, der zumindest einen Teil der Gewindespindel 13 umgibt. Zumindest ein Teil der Gewindespindel 13 ist in einem vom hohlzylindrischen Abschnitt des Gewindeteils 14 des zweiten Abtriebsmittels 12 begrenzten Hohlraum angeordnet.

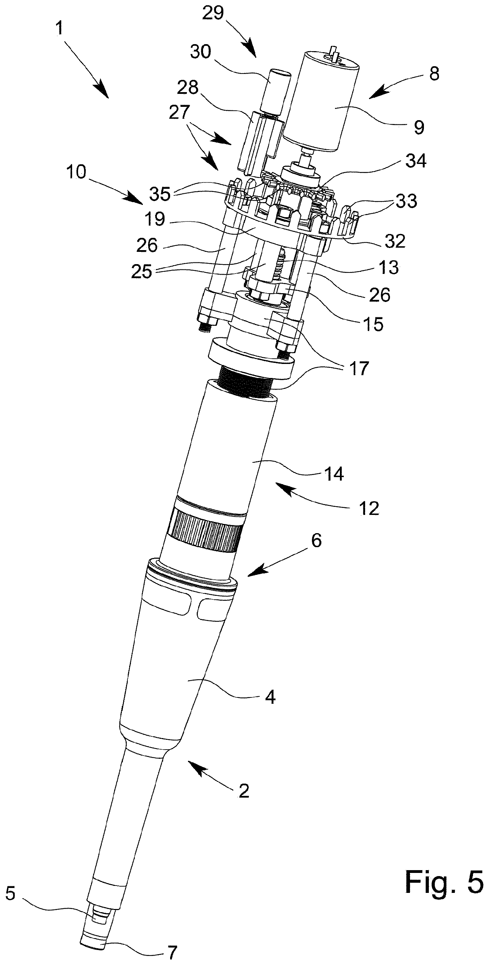

Fig. 5 zeigt schematisch in einer perspektivischen Ansicht einen Teil einer dritten bevorzugten Ausführungsform einer erfindungsgemäßen Pipettiervorrichtung 1, wobei eine vereinfachte Darstellung unter Weglassung von Teilen der Pipettiervorrichtung 1 gewählt wurde. Im Vergleich zu den Ausführungsbeispielen gemäß der Fig. 2 bis 4 hat die Getriebeeinrichtung 10 der Pipettiervorrichtung 1 gemäß Fig. 5 ein Umlaufrädergetriebe 18 mit
- einem ersten Zentralrad 19, das einen Hohlraum 20 aufweist,
- einem zweiten Zentralrad 21, das zentral im Hohlraum 20 des ersten Zentralrads 19 angeordnet ist, vom Elektromotor 9 angetrieben ist und dabei um eine Zentralachse 22 rotiert, und
- drei Umlaufrädern 23, wobei jedes Umlaufrad 23 um eine Umlaufachse 24 drehbar und zwischen dem ersten Zentralrad 19 und dem zweiten Zentralrad 21 im Hohlraum 20 angeordnet ist und jeweils mit dem ersten Zentralrad 19 und dem zweiten Zentralrad 21 in Eingriff steht.

Das erste Zentralrad 19 und/oder ein Träger 25 des jeweiligen Umlaufrades23 rotiert/rotieren um die Zentralachse 22.

Ein solches Umlaufrädergetriebe 18 wird auch als Planetengetriebe 18 bezeichnet, wobei das erste Zentralrad 19 auch als Hohlrad 19, das zweite Zentralrad 21 auch als Sonnenrad 21, die Umlaufräder 23 auch als Planetenräder 23 und die Träger 25 der Planetenräder auch als Planetenradträger 25 bezeichnet.

Vorteilhaft an dieser Ausgestaltung ist die kompakte und vorwiegend axial ausgerichtete Bauweise.

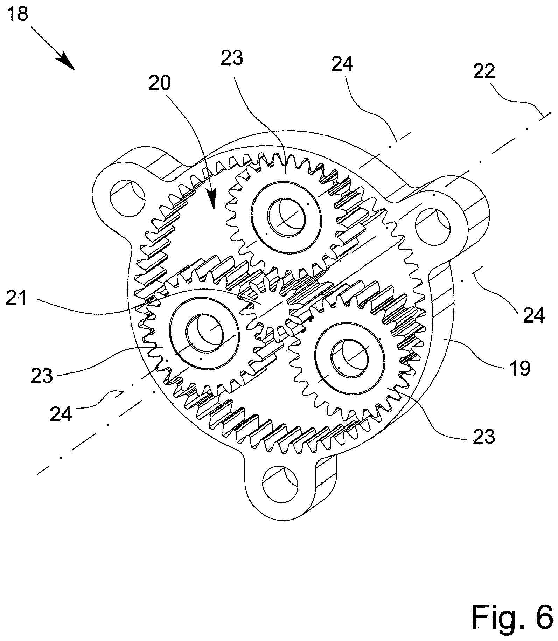

Ein Teil des Umlaufrädergetriebes 18 der Pipettiervorrichtung 1 aus Fig. 5 ist in Fig. 6 schematisch in einer perspektivischen Ansicht dargestellt, wobei eine vereinfachte Darstellung unter Weglassung von Teilen der Pipettiervorrichtung 1 gewählt wurde.

Bei dem dargestellten und bevorzugten Ausführungsbeispiel weist das erste Zentralrad19 an einer Innenseite eine Verzahnung auf. Diese Verzahnung des ersten Zentralrads 19 kann beispielsweise zwischen 30 und 90 Zähne aufweisen - hier hat diese Verzahnung des ersten Zentralrads 19 beispielhaft 60 Zähne. Jedes Umlaufrad 23 hat an einer Außenseite eine Verzahnung. Die Verzahnung jeden Umlaufrads 23 kann beispielsweise zwischen 12 und 48 Zähne aufweisen - hier hat diese Verzahnung jedes Umlaufrads 23 beispielhaft 24 Zähne. Das zweite Zentralrad 21 hat an einer Außenseite eine Verzahnung. Diese Verzahnung des zweiten Zentralrads 21 kann beispielsweise zwischen 6 und 24 Zähne aufweisen - hier hat diese Verzahnung des zweiten Zentralrads 21 beispielhaft 12 Zähne. Die Verzahnung jedes Umlaufrads 23 steht sowohl mit der Verzahnung des ersten Zentralrads19 als auch mit der Verzahnung des zweiten Zentralrads 21 in Eingriff.

Der Zahnradmodul beträgt vorzugsweise zwischen 0,2 mm und 0,8 mm, insbesondere 0,4 mm.

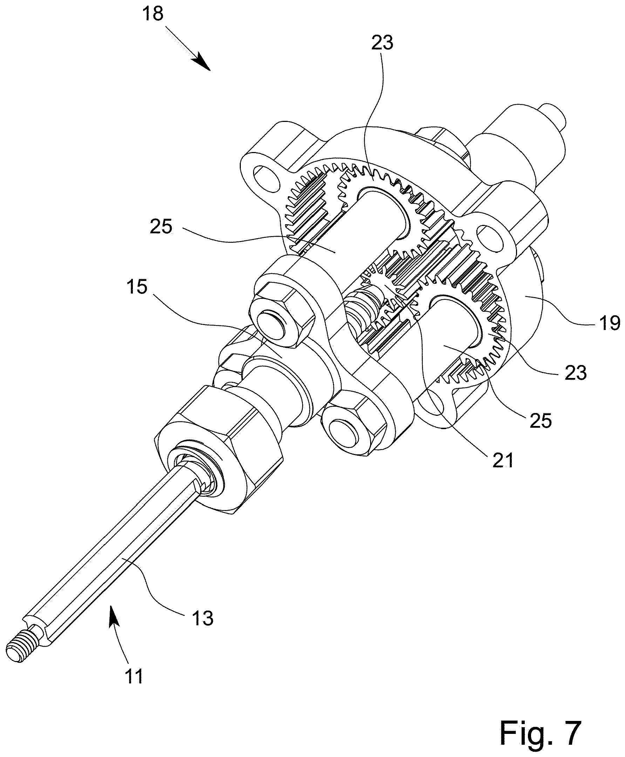

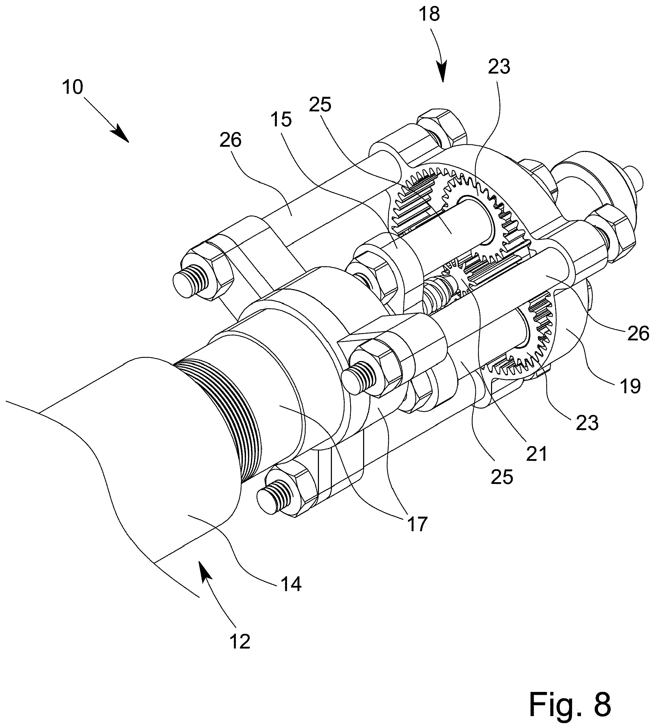

Der Teil des Umlaufrädergetriebes 18 aus Fig. 6 und weitere Teile der Getriebeeinrichtung 10 der Pipettiervorrichtung 1 aus Fig. 5 sind in den Fig. 7 und 8 jeweils schematisch in einer perspektivischen Ansicht dargestellt, wobei eine vereinfachte Darstellung unter Weglassung von Teilen der Pipettiervorrichtung 1 gewählt wurde.

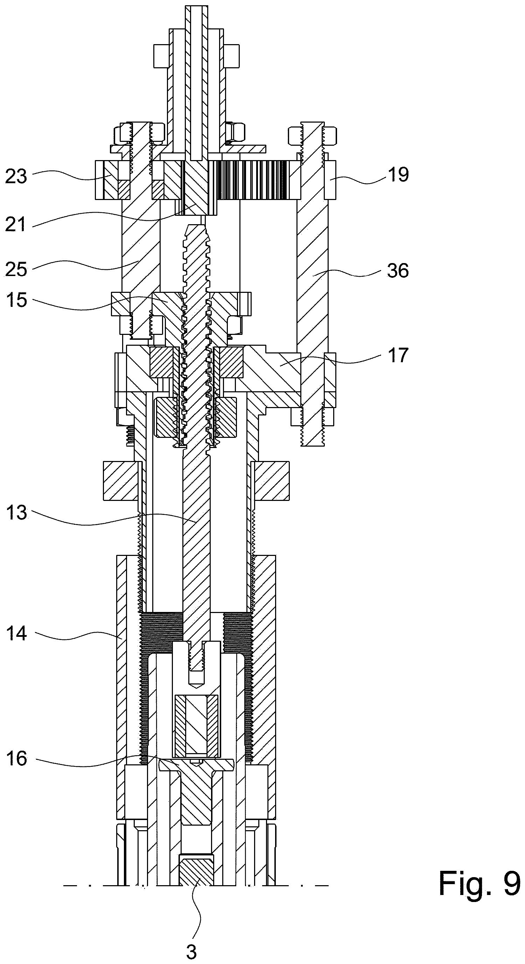

Details der Pipettiervorrichtung 1 aus Fig. 5, insbesondere der Getriebeeinrichtung 10, sind in der Schnittdarstellung der Fig. 9 dargestellt.

Bei dem hier dargestellten und bevorzugten Ausführungsbeispiel ist jeder Umlaufradträger 25 mit einem Umlaufrad 23 und mit der Gewindemutter 15 bewegungsmäßig gekoppelt. Jedes Umlaufrad 23 ist mittels des jeweiligen Umlaufradträgers 25 mit dem ersten Abtriebsmittel 11, insbesondere mit der Gewindespindel 13, bewegungsmäßig gekoppelt. Eine Drehbewegung der Umlaufräder 23 um die Zentralachse 22 verursacht eine Drehbewegung der Umlaufradträger 25 um die Zentralachse 22, die eine Drehbewegung der Gewindemutter 15 der Getriebeeinrichtung 10 verursacht, die - aufgrund der Verdrehsicherung der Gewindespindel 13 - eine translatorische Bewegung der Gewindespindel 13 verursacht.

Bei dem dargestellten und bevorzugten Ausführungsbeispiel ist das erste Zentralrad 19 mit dem zweiten Abtriebsmittel 12 bewegungsmäßig gekoppelt. Insbesondere ist an dem ersten Zentralrad 19 ein Verbindungselement 26 befestigt, hier sind es drei Verbindungselemente 26. Jedes Verbindungselement 26 ist mit dem Gewindeteil 17 der Getriebeeinrichtung 10 verbunden bzw. bewegungsmäßig gekoppelt. Eine Drehbewegung des ersten Zentralrad 19 um die Zentralachse 22 verursacht eine Drehbewegung des Gewindeteils 17 der Getriebeeinrichtung 10 und eine translatorische Bewegung des Gewindeteils 14 des zweiten Abtriebsmittels 12.

Bei dem dargestellten und bevorzugten Ausführungsbeispiel ist die Getriebeeinrichtung 10 dazu ausgebildet, eine Drehbewegung des Elektromotors 9 auf das zweite Abtriebsmittel 12 übersetzt zu übertragen, hier mit einem Übersetzungsverhältnis von -5. Außerdem ist die Getriebeeinrichtung 10 dazu ausgebildet, eine Drehbewegung des Elektromotors 9 auf das erste Abtriebsmittel 11 übersetzt zu übertragen, hier mit einem Übersetzungsverhältnis von 6. Sowohl hinsichtlich des ersten Abtriebsmittels 11 als auch hinsichtlich des zweiten Abtriebsmittels 12 ist es möglich, andere Übersetzungsverhältnisse oder keine Übersetzung/Untersetzung zu wählen.

Bei dem dargestellten und bevorzugten Ausführungsbeispiel hat der Elektromotor 9 ein Haltemoment zwischen 3 mNm und 12 mNm, insbesondere von 8 mNm.

Bei dem dargestellten und bevorzugten Ausführungsbeispiel kann die Abwerfereinrichtung 6 eine Kraft zwischen 20 N und 180 N, weiter bevorzugt von 80 N bis 120 N, insbesondere von 100 N auf eine an der Verdrängereinrichtung 2 angebrachte Pipettenspitze 7 ausüben.

Fig. 10 zeigt schematisch in einer perspektivischen Ansicht einen Teil der Pipettiervorrichtung 1 aus Fig. 5 in einem ersten Zustand, wobei eine vereinfachte Darstellung unter Weglassung von Teilen der Pipettiervorrichtung 1 gewählt wurde.

Bei dem dargestellten und bevorzugten Ausführungsbeispiel hat die Pipettiervorrichtung 1 eine Schalteinrichtung 27. Mittels der Schalteinrichtung 27 ist die Getriebeeinrichtung 10 derart schaltbar, dass die Getriebeeinrichtung 10 entweder das erste Abtriebsmittel 11 oder das zweite Abtriebsmittel 12 bewegt, wenn die Getriebeeinrichtung 10 durch den Elektromotor 9 angetrieben wird. Mittels der Schalteinrichtung 27 ist wahlweise das erste Abtriebsmittel 11 oder das zweite Abtriebsmittel 12 blockierbar.

Bevorzugt ist es, wenn - wie dargestellt - die Schalteinrichtung 27 ein Blockiermittel 28 zum Blockieren von mindestens einem Bauteil der Getriebeeinrichtung 10 aufweist. Das Blockiermittel 28 ist insbesondere zum Blockieren des ersten Abtriebsmittels 11 und/oder des zweiten Abtriebsmittels 12 ausgebildet.

Bei dem dargestellten und bevorzugten Ausführungsbeispiel ist das Blockiermittel 28 von einem Aktivator 29 der Schalteinrichtung 27, der hier einen weiteren Elektromotor 30 aufweist, angetrieben. Das Blockiermittel 28 ist auf einer Welle 31 des Elektromotors 30 angeordnet. Mittels des Elektromotors 30 und einer Gewindeanordnung ist das Blockiermittel 28 axial zu einer Rotationsachse der Getriebeeinrichtung 10 und axial zu einer sich durch die Welle 31 des Elektromotors 30 erstreckenden Achse verstellbar.

Bei dem dargestellten und bevorzugten Ausführungsbeispiel hat die Pipettiervorrichtung 1 ein erstes Kopplungsmittel 32 mit Vorsprüngen 33 und ein zweites Kopplungsmittel 34 mit Vorsprüngen 35. Das ersten Zentralrad 19 ist mit dem ersten Kopplungsmittel 32 drehfest verbunden und die Umlaufräder 23 sind mit dem zweiten Kopplungsmittel 34 drehfest verbunden. Das Blockiermittel 28 ist wahlweise mit dem ersten Kopplungsmittel 32 oder dem zweiten Kopplungsmittel 34 koppelbar.

In dem in Fig. 10 dargestellten ersten Zustand ist das Blockiermittel 28 mit dem zweiten Kopplungsmittel 34 gekoppelt, und zwar ist ein Vorsprung 36 des Blockiermittels 28 zwischen zwei Vorsprüngen 35 des zweiten Kopplungsmittels 34 angeordnet. In diesem ersten Zustand ist das Blockiermittel 28 nicht mit dem ersten Kopplungsmittel 32 gekoppelt.

In dem in Fig. 11 dargestellten zweiten Zustand ist das Blockiermittel 28 axial in Richtung des ersten Kopplungsmittels 32 verschoben und mit dem ersten Kopplungsmittel 32 gekoppelt, und zwar ist ein (anderer) Vorsprung 36 des Blockiermittels 28 zwischen zwei Vorsprüngen 33 des ersten Kopplungsmittels 32 angeordnet. In diesem zweiten Zustand ist das Blockiermittel 28 nicht mit dem zweiten Kopplungsmittel 34 gekoppelt.

Insbesondere kann also ein Vorsprung 36 des Blockiermittels 28 mit einem Vorsprung 33 oder mit mehreren Vorsprüngen 33 des ersten Kopplungsmittels 32 und/oder ein Vorsprung 36 des Blockiermittels 28 mit einem Vorsprung 35 oder mit mehreren Vorsprüngen 35 des zweiten Kopplungsmittels 34 in Eingriff gebracht werden, dies aber nicht gleichzeitig sondern ausschließlich nacheinander bzw. abwechselnd.

Bei einer Kopplung des Blockiermittels 28 mit dem ersten Kopplungsmittel 32 ist ein Rotieren des ersten Zentralrads 19 um die Zentralachse 22 blockiert. Somit ist auch das zweite Abtriebsmittel 12, also eine Bewegung des zweiten Abtriebsmittels 12, blockiert. Ein Rotieren des ersten Zentralrads 19 um die Zentralachse 22 ist nicht möglich und ein Rotieren des zweiten Zentralrads 21 um die Zentralachse 22 - hervorgerufen durch den Elektromotor 9 - verursacht ein Rotieren der Umlaufradträger 25 um die Zentralachse 22, was ein Rotieren der Gewindemutter 15 bewirkt. Dies führt zu einer translatorischen Bewegung der Gewindespindel 13.

Bei einer Kopplung des Blockiermittels 28 mit dem zweiten Kopplungsmittel 34 ist ein Rotieren der Umlaufräder 23 um die Zentralachse 22 blockiert. Somit ist das erste Abtriebsmittel 11, also eine Bewegung des ersten Abtriebsmittels 11, blockiert. Ein Rotieren der Umlaufräder 23 und der Umlaufradträger 25 um die Zentralachse 22 ist nicht möglich. Ein Rotieren des zweiten Zentralrads 21 um die Zentralachse 22 - hervorgerufen durch den Elektromotor 9 - verursacht ein Rotieren des ersten Zentralrads 19 um die Zentralachse 22, was ein Rotieren des Gewindeteils 17 der Getriebeeinrichtung 10 bewirkt. Dies führt zu einer translatorischen Bewegung des zweiten Abtriebsmittels 12.

Nicht dargestellt ist, dass die Pipettiervorrichtung 1 ein Bedienelement zur Steuerung des Elektromotors 9 aufweist. Hier ist vorgesehen, dass mittels dieses Bedienelements auch das Blockiermittel 28 und/oder der Aktivator 29 steuerbar ist. Dies erlaubt eine einfache und komfortable Handhabung.

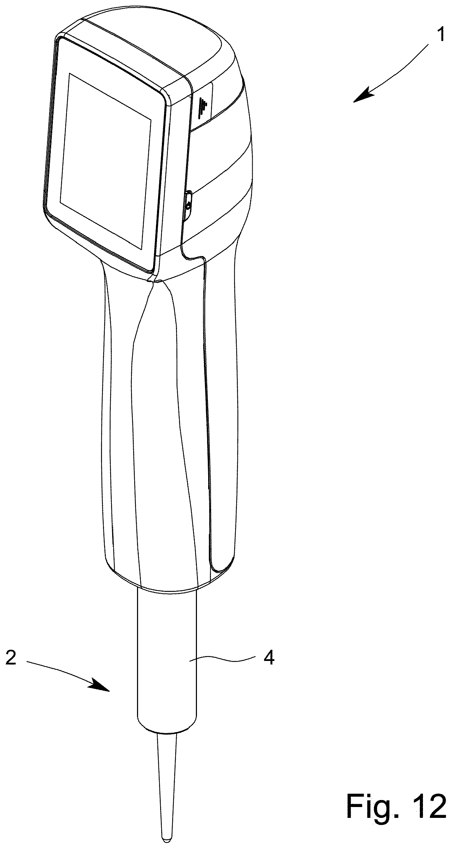

Fig. 12 zeigt schematisch in einer perspektivischen Ansicht eine weitere Ausführungsform einer erfindungsgemäßen Pipettiervorrichtung 1. Hierbei handelt es sich um einen auf dem Direktverdrängerprinzip basierenden Dispenser zum Aufnehmen und Abgeben von Fluidvolumina.

Der Dispenser hat eine Antriebseinrichtung 8 wie zuvor beschrieben und eine Getriebeeinrichtung 10 wie zuvor beschrieben und eine Schalteinrichtung 27 wie zuvor beschrieben.

Der Dispenser hat außerdem eine (nicht dargestellte) Koppeleinrichtung zum lösbaren Koppeln einer Verdrängereinrichtung 2 mit dem Dispenser. Die Verdrängereinrichtung 2 ist hierbei als austauschbare Kolben-Zylinder-Anordnung ausgebildet. Die Getriebeeinrichtung 10 des Dispensers ist dazu ausgebildet, eine Drehbewegung des Elektromotors 9 auf die Koppeleinrichtung zu übertragen, was zum Lösen einer mit dem Dispenser gekoppelten Verdrängereinrichtung von dem Dispenser führt. Dazu ist die Koppeleinrichtung 2 mit dem zweiten Abtriebsmittel 12 der Getriebeeinrichtung 10 des Dispensers bewegungsmäßig gekoppelt bzw. von diesem beweglich angetrieben. Vorzugsweise ist die Getriebeeinrichtung 10 dazu ausgebildet, eine Drehbewegung des Elektromotors 9 auf das zweite Abtriebsmittel 12 untersetzt oder übersetzt zu übertragen.

### Bezugszeichenliste:

- 1: Pipettiervorrichtung
- 2: Verdrängereinrichtung
- 3: Verdrängermittel von 2
- 4: Verdrängergehäuse von 2
- 5: Endstück von 2
- 6: Abwerfereinrichtung von 1
- 7: Pipettenspitze für 2
- 8: Antriebseinrichtung von 1
- 9: Elektromotor von 8
- 10: Getriebeeinrichtung von 1
- 11: erstes Abtriebsmittel von 10
- 12: zweites Abtriebsmittel von 10
- 13: Gewindespindel von 11
- 14: Gewindeteil von 12
- 15: Gewindemutter von 10
- 16: Magnet von 1
- 17: Gewindeteil von 10
- 18: Umlaufrädergetriebe von 10
- 19: erstes Zentralrad von 18
- 20: Hohlraum von 19
- 21: zweites Zentralrad von 18
- 22: Zentralachse von 18
- 23: Umlaufräder von 18
- 24: Umlaufachse von 23
- 25: Umlaufradträger für 23
- 26: Verbindungselement von 10
- 27: Schalteinrichtung von 1
- 28: Blockiermittel von 27
- 29: Aktivator von 27
- 30: Elektromotor von 29
- 31: Welle von 30
- 32: erstes Kopplungsmittel von 1
- 33: Vorsprünge von 32
- 34: zweites Kopplungsmittel von 1
- 35: Vorsprünge von 34
- 36: Vorsprünge von 28

## Patentansprüche

1. Pipettiervorrichtung (1) zum Aufnehmen und Abgeben von Fluidvolumina, aufweisend
- eine Antriebseinrichtung (8) mit einem Elektromotor (9), und
- eine Getriebeeinrichtung (10) mit einem ersten Abtriebsmittel (11),
wobei die Getriebeeinrichtung (10) von dem Elektromotor (9) mittels einer Drehbewegung angetrieben ist und dazu ausgebildet ist, eine Drehbewegung des Elektromotors (9) auf das erste Abtriebsmittel (11) zu übertragen,
**dadurch gekennzeichnet, dass**
die Getriebeeinrichtung (10) ein zweites Abtriebsmittel (12) aufweist und dazu ausgebildet ist, eine Drehbewegung des Elektromotors (9) auf das zweite Abtriebsmittel (12) zu übertragen.

2. Pipettiervorrichtung nach Anspruch 1, **dadurch gekennzeichnet, dass** das erste Abtriebsmittel (11) mit einer Verdrängereinrichtung (2) koppelbar oder gekoppelt ist, vorzugsweise wobei die Verdrängereinrichtung (2) ein Verdrängermittel (3), insbesondere einen Kolben, und ein Verdrängergehäuse (4), insbesondere einen Zylinder, aufweist und das Verdrängermittel (3) beweglich im Verdrängergehäuse (4) angeordnet ist,
insbesondere wobei das erste Abtriebsmittel (11) mit dem Verdrängermittel (3) bewegungsmäßig gekoppelt ist.

3. Pipettiervorrichtung nach Anspruch 1 oder 2, **dadurch gekennzeichnet, dass**
- das erste Abtriebsmittel (11) mit dem Elektromotor (9) bewegungsmäßig koppelbar ist, so dass im gekoppelten Zustand eine Drehbewegung des Elektromotors (9) in eine vorzugsweise translatorische Bewegung des ersten Abtriebsmittels (11) umgeformt wird und
- das zweite Abtriebsmittel (12) mit dem Elektromotor (9) bewegungsmäßig koppelbar ist, so dass im gekoppelten Zustand eine Drehbewegung des Elektromotors (9) in eine vorzugsweise translatorische Bewegung des zweiten Abtriebsmittels (12) umgeformt wird.

4. Pipettiervorrichtung nach einem der vorhergehenden Ansprüche, **dadurch gekennzeichnet, dass**
- die Getriebeeinrichtung (10) eine Gewindemutter (15) aufweist, die bewegungsmäßig mit dem Elektromotor (9) koppelbar ist, so dass im gekoppelten Zustand eine Drehbewegung des Elektromotors (9) eine Drehbewegung der Gewindemutter (15) verursacht, und
- das erste Abtriebsmittel (11) eine Gewindespindel (13) aufweist, die mit der Gewindemutter (15) in Eingriff steht und verdrehgesichert ist, so dass eine vom Elektromotor (9) verursachte Drehbewegung der Gewindemutter (15) eine translatorische Bewegung der Gewindespindel (13) verursacht,
insbesondere wobei die Gewindespindel (13) mit einem Verdrängermittel (3) einer Verdrängereinrichtung (2) bewegungsmäßig koppelbar oder gekoppelt ist, bevorzugt mittels eines Magneten (16) der Pipettiervorrichtung (1).

5. Pipettiervorrichtung nach einem der vorhergehenden Ansprüche, **dadurch gekennzeichnet, dass**
- die Getriebeeinrichtung (10) ein rotatorisch bewegbares Gewindeteil (17) aufweist und das Gewindeteil (17) der Getriebeeinrichtung (10) bewegungsmäßig mit dem Elektromotor (9) koppelbar ist, so dass im gekoppelten Zustand eine Drehbewegung des Elektromotors (9) eine Drehbewegung des Gewindeteils (17) der Getriebeeinrichtung (10) verursacht, und
- das zweite Abtriebsmittel (12) ein translatorisch bewegbares Gewindeteil (14) aufweist, das mit dem Gewindeteil (17) der Getriebeeinrichtung (10) in Eingriff steht, so dass eine vom Elektromotor (9) verursachte Drehbewegung des Gewindeteils (17) der Getriebeeinrichtung (10) eine translatorische Bewegung des Gewindeteils (14) des zweites Abtriebsmittels (12) verursacht.

6. Pipettiervorrichtung nach einem der vorhergehenden Ansprüche, **dadurch gekennzeichnet, dass**
- das zweite Abtriebsmittel (12), insbesondere das Gewindeteil (14) des zweiten Abtriebsmittels (12), koaxial zum ersten Abtriebsmittel (11), insbesondere zur Gewindespindel (13) des ersten Abtriebsmittels (11), angeordnet ist und/oder
- die Bewegungsachse des zweiten Abtriebsmittels (12), insbesondere des Gewindeteils (14) des zweiten Abtriebsmittels (12), mit der Bewegungsachse des ersten Abtriebsmittels (11), insbesondere der Gewindespindel (13) des ersten Abtriebsmittels (11), übereinstimmt und/oder
- das zweite Abtriebsmittel (12), insbesondere das Gewindeteil (14) des zweiten Abtriebsmittels (12), das erste Abtriebsmittel (11), insbesondere die Gewindespindel (13) des ersten Abtriebsmittels (11), zumindest teilweise umgibt und/oder
- das erste Abtriebsmittel (11), insbesondere die Gewindespindel (13) des ersten Abtriebsmittels (11), zumindest teilweise in einem Hohlraum des zweiten Abtriebsmittels (12), insbesondere in einem Hohlraum des Gewindeteils (14) des zweiten Abtriebsmittels (12), angeordnet ist.

7. Pipettiervorrichtung nach einem der vorhergehenden Ansprüche, **dadurch gekennzeichnet, dass** die Pipettiervorrichtung (1) eine Schalteinrichtung (27) aufweist,
- mittels der die Getriebeeinrichtung (10) derart schaltbar ist, dass die Getriebeeinrichtung (10) entweder das erste Abtriebsmittel (11) oder das zweite Abtriebsmittel (12) bewegt, wenn die Getriebeeinrichtung (10) durch den Elektromotor (9) angetrieben wird, und/oder
- mittels der wahlweise das erste Abtriebsmittel (11) oder das zweite Abtriebsmittel (12) blockierbar ist und/oder
- mittels der die Getriebeeinrichtung (10) bewegungsmäßig mit dem Elektromotor (9) koppelbar und bewegungsmäßig vom Elektromotor (9) entkoppelbar ist.

8. Pipettiervorrichtung nach Anspruch 7, **dadurch gekennzeichnet, dass** die Schalteinrichtung (27) ausgebildet ist
- zum Aktivieren einer Bewegung des ersten Abtriebsmittels (11) und zum vorzugsweise gleichzeitigen Deaktivieren einer Bewegung des zweiten Abtriebsmittels (12) und/oder
- zum Aktivieren einer Bewegung des zweiten Abtriebsmittels (12) und zum vorzugsweise gleichzeitigen Deaktivieren einer Bewegung des ersten Abtriebsmittels (11).

9. Pipettiervorrichtung nach Anspruch 7 oder 8, **dadurch gekennzeichnet, dass** die Schalteinrichtung (27) ein Blockiermittel (28) aufweist, das zum Blockieren von mindestens einem Bauteil der Getriebeeinrichtung (10) und/oder zum Blockieren des ersten Abtriebsmittels (11) und/oder zum Blockieren des zweiten Abtriebsmittels (12) ausgebildet ist, wobei, vorzugsweise, das Blockiermittel (28)
- ein Gesperre aufweist oder durch ein Gesperre gebildet ist, insbesondere wobei das Gesperre ein auf Formschluss basierendes Formgesperre oder ein auf Kraftschluss basierendes Kraftgesperre, ganz besonders ein Reibgesperre oder ein Magnetgesperre ist, und/oder
- axial zu einer Rotationsachse der Getriebeeinrichtung (10) verstellbar ist und/oder
- mittels eines Aktivators (29) der Pipettiervorrichtung (1) angetrieben bzw. bewegbar ist.

10. Pipettiervorrichtung nach Anspruch 9, **dadurch gekennzeichnet, dass** die Pipettiervorrichtung (1) ein Bedienelement zur Steuerung des Elektromotors (9) aufweist, mittels dem das Blockiermittel (28) und/oder der Aktivator (29) steuerbar ist/sind.

11. Pipettiervorrichtung nach einem der vorhergehenden Ansprüche, **dadurch gekennzeichnet, dass** die Getriebeeinrichtung (10) ein Umlaufrädergetriebe (18) aufweist mit
- einem ersten Zentralrad (19),
- einem zweiten Zentralrad (21), das vom Elektromotor (9) angetrieben ist, das konzentrisch zu dem ersten Zentralrad (19) angeordnet ist und dabei um eine Zentralachse (22) rotiert, und
- einem Umlaufrad (23), vorzugsweise drei Umlaufrädern (23), wobei jedes Umlaufrad (23) um eine Umlaufachse (24) drehbar und zwischen dem ersten Zentralrad (19) und zweiten Zentralrad (21) angeordnet ist und jeweils mit dem ersten Zentralrad (19) und zweiten Zentralrad (21) in Eingriff steht,
wobei, vorzugsweise, das erste Zentralrad (19) und/oder ein Träger (25) des Umlaufrades (23) um die Zentralachse (22) rotiert.

12. Pipettiervorrichtung nach Anspruch 11, **dadurch gekennzeichnet, dass** das Umlaufrädergetriebe ein Planetengetriebe ist, wobei
- das erste Zentralrad (19) einen Hohlraum (20) aufweist,
- das zweite Zentralrad (21) im Hohlraum (20) des ersten Zentralrades (19) angeordnet ist, vom Elektromotor (9) angetrieben ist und um eine Zentralachse (22) rotiert,
- jedes Umlaufrad (23) zwischen dem ersten Zentralrad (19) und zweiten Zentralrad (21) im Hohlraum (20) angeordnet ist und jeweils mit dem ersten Zentralrad (19) und dem zweiten Zentralrad (21) in Eingriff steht und
- das erste Zentralrad (19) und/oder ein Träger (25) des Umlaufrades (23) um die Zentralachse (22) rotiert.

13. Pipettiervorrichtung nach Anspruch 11 oder 12, **dadurch gekennzeichnet, dass**
- das erste Zentralrad (19), vorzugsweise mittels des Blockiermittels (28), derart blockierbar ist, dass kein Rotieren des ersten Zentralrades (19) um die Zentralachse (22) möglich ist und ein Rotieren des zweiten Zentralrades (21) um die Zentralachse (22) ein Rotieren des Trägers (25) des Umlaufrades (23) um die Zentralachse (22) verursacht und
- der Träger (25) des Umlaufrades (23), vorzugsweise mittels des Blockiermittels (28), derart blockierbar ist, dass kein Rotieren des Umlaufrades (23) oder des Trägers (25) des Umlaufrades (23) um die Zentralachse (22) möglich ist und ein Rotieren des zweiten Zentralrades (21) um die Zentralachse (22) ein Rotieren des ersten Zentralrades (19) um die Zentralachse (22) verursacht.

14. Pipettiervorrichtung nach Anspruch 11, 12 oder 13, **dadurch gekennzeichnet, dass** das Umlaufrad (23) oder der Träger (25) des Umlaufrades (23) mit dem ersten Abtriebsmittel (11) bewegungsmäßig gekoppelt ist,
vorzugsweise wobei
- die Getriebeeinrichtung (10) eine Gewindemutter (15) aufweist und die Gewindemutter (15) bewegungsmäßig mit dem Elektromotor (9) koppelbar ist, so dass im gekoppelten Zustand eine Drehbewegung des Elektromotors (9) eine Drehbewegung der Gewindemutter (15) verursacht,
- das erste Abtriebsmittel (11) eine Gewindespindel (13) aufweist, die mit der Gewindemutter (15) in Eingriff steht und verdrehgesichert ist und
- das Umlaufrad (23) oder der Träger (25) des Umlaufrades (23) mit der Gewindemutter (15) bewegungsmäßig gekoppelt ist, so dass eine Drehbewegung des Umlaufrades (23) oder des Trägers (25) des Umlaufrades (23) um die Zentralachse (22) eine Drehbewegung der Gewindemutter (15) und eine translatorische Bewegung der Gewindespindel (13) verursacht,
insbesondere wobei die Gewindespindel (13) mit einem Verdrängermittel (3) einer Verdrängereinrichtung (2) bewegungsmäßig koppelbar oder gekoppelt ist, bevorzugt mittels eines Magneten (16) der Pipettiervorrichtung (1).

15. Pipettiervorrichtung nach einem der Ansprüche 11 bis 14, **dadurch gekennzeichnet, dass** das erste Zentralrad (19) mit dem zweiten Abtriebsmittel (12) bewegungsmäßig gekoppelt ist,
vorzugsweise wobei
- die Getriebeeinrichtung (10) ein rotatorisch bewegbares Gewindeteil (17) aufweist und das Gewindeteil (17) der Getriebeeinrichtung (10) bewegungsmäßig mit dem Elektromotor (9) koppelbar ist, so dass im gekoppelten Zustand eine Drehbewegung des Elektromotors (9) eine Drehbewegung des Gewindeteils (17) der Getriebeeinrichtung (10) verursacht,
- das zweite Abtriebsmittel (12) ein translatorisch bewegbares Gewindeteil (14) aufweist, das mit einem rotatorisch bewegbaren Gewindeteil (17) der Getriebeeinrichtung (10) in Eingriff steht und
- das erste Zentralrad (19) mit dem Gewindeteil (17) der Getriebeeinrichtung (10) bewegungsmäßig gekoppelt ist, so dass eine Drehbewegung des ersten Zentralrads (19) um die Zentralachse (22) eine Drehbewegung des Gewindeteils (17) der Getriebeeinrichtung (10) und eine translatorische Bewegung des Gewindeteils (14) des zweites Abtriebsmittels (12) verursacht.

16. Pipettiervorrichtung nach einem der Ansprüche 11 bis 15, **dadurch gekennzeichnet, dass**
- das erste Zentralrad (19) mit einem ersten Kopplungsmittel (32) der Pipettiervorrichtung (1) und das Umlaufrad (23) mit einem zweiten Kopplungsmittel (34) der Pipettiervorrichtung (1) verbunden sind,
- die Pipettiervorrichtung (1) ein Blockiermittel (28) aufweist, das wahlweise mit dem ersten Kopplungsmittel (32) oder dem zweiten Kopplungsmittel (34) koppelbar ist,
- bei einer Kopplung des Blockiermittels (28) mit dem ersten Kopplungsmittel (32) ein Rotieren des ersten Zentralrads (19) um die Zentralachse (22) blockiert ist und somit das zweite Abtriebsmittel (12) blockiert ist und
- bei einer Kopplung des Blockiermittels (28) mit dem zweiten Kopplungsmittel (34) ein Rotieren des Umlaufrades (23) um die Zentralachse (22) blockiert ist und somit das erste Abtriebsmittel (11) blockiert ist,
vorzugsweise wobei das Blockiermittel (28)
- axial zu einer Rotationsachse der Getriebeeinrichtung (10) verstellbar ist und/oder
- mittels eines Aktivators (29) der Pipettiervorrichtung (1) angetrieben ist.

17. Pipettiervorrichtung nach einem der vorhergehenden Ansprüche, **dadurch gekennzeichnet, dass**
- die Pipettiervorrichtung (1), insbesondere das erste Abtriebsmittel (11), mit einer Verdrängereinrichtung (2) gekoppelt ist, vorzugsweise wobei die Verdrängereinrichtung (2) ein Verdrängermittel (3), insbesondere einen Kolben, und ein Verdrängergehäuse (4), insbesondere einen Zylinder, aufweist und das Verdrängermittel (3) beweglich im Verdrängergehäuse (4) angeordnet ist, insbesondere wobei das erste Abtriebsmittel (11) mit dem Verdrängermittel (3) bewegungsmäßig gekoppelt ist,
- die Pipettiervorrichtung (1) eine Abwerfereinrichtung (6) aufweist, die derart ausgebildet ist, dass eine an der Verdrängereinrichtung (2) angebrachte Pipettenspitze (7) relativ zur Verdrängereinrichtung (2) bewegbar und schließlich von der Verdrängereinrichtung (2) und/oder der Pipettiervorrichtung (1) abwerfbar ist, und
- die Getriebeeinrichtung (10) dazu ausgebildet ist, eine Drehbewegung des Elektromotors (9) auf die Abwerfereinrichtung (6) zu übertragen und, vorzugsweise, in eine bevorzugt translatorische Bewegung der Abwerfereinrichtung (6) umzuformen, die zum Abwerfen einer Pipettenspitze (7) von der Pipettiervorrichtung (1) führt,
vorzugsweise wobei die Abwerfereinrichtung (6) mit dem zweiten Abtriebsmittel (12) bewegungsmäßig gekoppelt ist und/oder beweglich angetrieben ist und, bevorzugt, die Getriebeeinrichtung (10) dazu ausgebildet ist, eine Drehbewegung des Elektromotors (9) auf das zweite Abtriebsmittel (12) untersetzt oder übersetzt zu übertragen.

18. Pipettiervorrichtung nach einem der vorhergehenden Ansprüche, **dadurch gekennzeichnet, dass**
- die Pipettiervorrichtung (1) eine Koppeleinrichtung zum lösbaren Koppeln einer Verdrängereinrichtung (2), insbesondere einer Kolben-Zylinder-Anordnung, mit der Pipettiervorrichtung (1) aufweist und
- die Getriebeeinrichtung (10) dazu ausgebildet ist, eine Drehbewegung des Elektromotors (9) auf die Koppeleinrichtung zu übertragen, was zum Lösen einer mit der Pipettiervorrichtung (1) gekoppelten Verdrängereinrichtung (2) von der Pipettiervorrichtung (1) führt,
vorzugsweise wobei die Koppeleinrichtung mit dem zweiten Abtriebsmittel (12) bewegungsmäßig gekoppelt ist und/oder beweglich angetrieben ist und, bevorzugt, die Getriebeeinrichtung (10) dazu ausgebildet ist, eine Drehbewegung des Elektromotors (9) auf das zweite Abtriebsmittel (12) untersetzt oder übersetzt zu übertragen.
